Europäisches Patentamt

European Patent Office

Office européen des brevets

(19)

(11) Veröffentlichungsnummer: **0 052 726**
**B1**

(12) **EUROPÄISCHE PATENTSCHRIFT**

(45) Veröffentlichungstag der Patentschrift:
06.02.85

(51) Int. Cl.⁴: **A 47 J 41/02**

(21) Anmeldenummer: 81107978.9

(22) Anmeldetag: 06.10.81

(54) Als Isoliergefäss ausgebildetes Speisegefäss.

(30) Priorität: 20.11.80 DE 3043826

(43) Veröffentlichungstag der Anmeldung:
02.06.82 Patentblatt 82/22

(45) Bekanntmachung des Hinweises auf die Patenterteilung:
06.02.85 Patentblatt 85/6

(84) Benannte Vertragsstaaten:
AT BE CH DE FR GB IT LI LU NL SE

(56) Entgegenhaltungen:
DE - A - 1 212 696
DE - A - 1 429 786
DE - A - 2 833 609
FR - A - 2 242 058
GB - A - 1 438 025
GB - A - 2 033 573
US - A - 2 925 187
US - A - 3 258 147
US - A - 3 298 554
US - A - 3 356 243

(73) Patentinhaber: **Dr. Anso Zimmermann Isolierflaschen, Industriestrasse, D-6434 Niederaula (DE)**

(72) Erfinder: **Zimmermann, Anso, Dr., Seilerweg 34, D-6430 Bad Hersfeld (DE)**

(74) Vertreter: **Körber, Wolfhart, Dr. et al, Patentanwälte Dipl.-Ing. H. Mitscherlich Dipl.-Ing. K. Gunschmann Dr.rer.nat. W. Körber Dipl.Ing. J. Schmidt-Evers Dipl.-Ing. W. Melzer Steinsdorfstrasse 10, D-8000 München 22 (DE)**

## Beschreibung

Die Erfindung betrifft ein als Isoliergefäss ausgebildetes Speisegefäss nach dem Oberbegriff des Anspruches 1.

Bei einem solchen Gefäss (DE-A-14 29 786) werden die einzelnen Bauteile durch Gewindeanordnungen miteinander verbunden. Der empfindliche gläserne, evakuierte Isolierbehälter stützt sich auf einen vom Boden der Ummantelung aufragenden, rohrförmigen, starren Stutzen ab. Die Montage des Gefässes muss daher sehr sorgfältig vorgenommen werden, damit beim Zusammenschrauben des Innenteils mit dem Boden das Isoliergefäss nicht zu hart eingespannt wird und Schaden erleidet.

Derartige transportable Speisegefässe sind seit längerem für das Warm- bzw. Kühlhalten von Speisen insbesondere für Reisen, Picknicken und dergleichen bekannt. Der wärmeisolierende Innenbehälter besteht bei solchen Gefässen aus einem doppelwandigen, evakuierten und gegebenenfalls innenverspiegelten Glaskörper. Der Innenbehälter ist daher relativ anfällig gegen mechanische Beschädigungen, insbesondere bei Verwendung in einem Speisegefäss der obengenannten Art, wenn unmittelbar aus dem Speisegefäss mit Metallbestecken gegessen wird. Man ist daher dazu übergegangen, bei derartigen Speisegefässen zum Schutz des Innenbehälters einen an seiner Innenwandung anliegenden und diesen schützenden Kunststoff-Inneneinsatz vorzusehen. Derartige Behälter sind beispielsweise aus der DE-B-12 12 696 und dem DE-U-73 31 929 bekannt geworden.

Da der empfindliche Innenbehälter zwischen dem Mantelkörper und dem Inneneinsatz möglichst dicht und zuverlässig eingeschlossen und gehalten sein muss, ist fertigungstechnische Sorgfalt erforderlich, um diesen haltenden Einschluss zu verwirklichen. So ist in der zweitgenannten Schrift zum Stand der Technik eine teilweise Einstückigkeit zwischen Inneneinsatz und Mantelkörper vorgeschlagen, was zu einem relativ aufwendigen und sperrigen Kunststoffspritzteil führt. Dabei übergreift der Innenbehälter oben den Isolierbehälter, bildet dann einen Teil des Aussenmantels, und wird mit dem Mantelteil anschliessend verschraubt. Der empfindliche gläserne Isolierbehälter stützt sich auf einen starren vom Boden aufragenden Stutzen ab. Er ist daher ebenfalls beim Zusammenschrauben von Mantel und Innenbehälter gefährdet. In der erstgenannten Schrift zum Stand der Technik ist für die Verbindung zwischen Inneneinsatz und Mantelkörper ein Verschweissen oder Verkleben vorgeschlagen, was fertigungstechnisch aufwendig ist und Sorgfalt bei der Massenproduktion erfordert.

Ein entsprechendes fertigungstechnisches Problem besteht beim Gefässverschluss. Dieser im allgemeinen als Schraubverschluss ausgebildete, bei Speisegefässen einen Griff tragende Teil, muss einen Dichtungsteil tragen, der die Innenöffnung des Speisegefässes gut dichtend verschliesst.

Bei einem weiteren Gefäss (GB-A-2 033 573) ist als Abstützung des gläsernen Isoliergefässes auf dem Boden des Mantels eine elastische Schutzhülse vorgesehen. Diese kann im bestimmten Bereich nachgeben, jedoch erfordert auch diese Anordnung eine grosse Sorgfalt beim Zusammenschrauben von Boden und Mantel.

Bei einem weiteren Isoliergefäss (DE-A-28 33 609) ist das empfindliche Isoliergefäss in gleicher Weise eingespannt und gefährdet. Bei einem solchen Gefäss ist der seitlich vom Mantel bzw. Deckel abstehende Handgriff für die Aufnahme von Besteckteilen ausgebildet. Die Verbindung von Mantel und Innenteil bzw. Boden erfolgt mittels Gewindeanordnungen, der Verschluss wird in den Innenteil mittels Gewinde eingeschraubt bzw. mittels einer Bajonettanordnung eingesetzt. Bajonettverbindungen werden auch zum Einsetzen von Verschlussstopfen in Isolierbehälter benutzt (US-A-2 925 187).

Bei Isoliergefässen, die keinen gläsernen Isolierbehälter aufweisen, sondern bei denen die Isolierung durch Ausschäumen des Zwischenraumes zwischen Mantel und Innenbehälter erfolgt (US-A-3 298 554 bzw. 3 356 243), sind zur Verbindung von zwei übereinander angeordneten Mantelteilen im unteren Teil eine umlaufende, radial nach aussen offene Ringnut und im oberen Teil ein radial nach innen weisender Flansch vorgesehen, der in die Nut einschnappen kann und so die beiden Teile zusammenhält. Um eine Verdrehung der beiden Mantelteile gegeneinander bzw. des Innenteils gegenüber dem Mantel zu verhindern, sind auf dem Teil keilartige Vorsprünge und auf dem anderen Teil korrespondierende Nuten vorgesehen, so dass beim Zusammenbau diese Teile ineinandergreifen bzw. es sind auf dem Innenteil nach oben ragende Zapfen angeordnet, die in korrespondierende vertikale Bohrungen in einem radial nach innen ragenden Flansch des Oberteils des Mantels beim Zusammenbau eingreifen. Dabei muss grösste Sorgfalt beachtet werden, damit die Keil-Nut- bzw. die Zapfen- Bohrungsverbindungen einwandfrei fluchten, wenn die Schnappverbindung hergestellt wird. Eine Montage mit diesen Führungsmitteln ist zeitraubend und umständlich und kann nur durch aufwendige Steuerungsmassnahmen mechanisiert werden.

Der Erfindung liegt die Aufgabe zugrunde, die einzelnen den Innenbehälter aufnehmenden Teile konstruktiv so zuzugestalten, dass sie fertigungstechnisch ohne zusätzliche Arbeitsmittel oder Vorrichtungen mit geringem Arbeitsaufwand am Fliessband zu dem fertigen Speisegefäss zusammengefügt werden können.

Diese Aufgabe wird dadurch gelöst, dass das Mantelteil mit dem Inneneinsatz, sowie das Deckelteil mit dem Dichtungsteil des Gefässverschlusses durch Verrastkonstruktionen fest miteinander verbunden sind und die Verrastkonstruktionen jeweils aus einer kombinierten Drehverrastung und einer Axialzugverrastung bestehen.

Dadurch ist fertigungstechnisch erreicht, dass das Speisegefäss ohne weitere Arbeits- oder Hilfsmittel im Fliessbandbetrieb als Massenartikel zusammengesetzt werden kann. Dabei sind auch ohne weiteres aus beliebigen verschiedenfarbigen Kunststoffteilen wahlweise Speisegefässe zusammensetzbar. Der durch die Ausbildung der Verrastkonstruktionen zunächst etwas grösser erscheinende Herstellungsaufwand für die Einzelteile ist unbedeutend, da die Spritzgussform für eine grosse Anzahl der vorzufertigenden Kunststoff-Einzelteile nur einmal anzufertigen ist.

Auf der Innenseite des Bodenteiles sind einstückig angeformte, hochstehende, den Innenbehälter abstützende elastische Stege angeordnet. So bedarf es für den Einschluss des Innenbehälters beim Zusammenbau lediglich der Verbindung der Verrastung zwischen Inneneinsatz und Mantelkörper, wobei auch bei nicht zu vermeidenden grossen Toleranzunterschieden in der Grösse des Innenbehälters, dessen feste Abstützung durch die über einen weiten Bereich nachgebenden hochstehenden Stege erfolgt.

Beispielsweise zweckmässige Ausführungsformen der Erfindung werden im folgenden anhand der beigefügten Zeichnungen beschrieben. Es zeigen:

Fig. 1 einen Halbschnitt durch ein erfindungsgemässes Speisegefäss;

Fig. 2 eine Schnittansicht des Mantelkörpers;

Fig. 3 eine Ansicht teilweise im Schnitt des Inneneinsatzes;

Fig. 4 im Ausschnitt eine Schnittansicht entlang der Linie IV–IV in Fig. 3;

Fig. 5 eine Ansicht teilweise im Schnitt des Deckelteiles;

Fig. 6 eine Schnittansicht entlang der Linie VI–VI in Fig. 5;

Fig. 7 eine Ansicht teilweise im Schnitt des Dichtungsteiles.

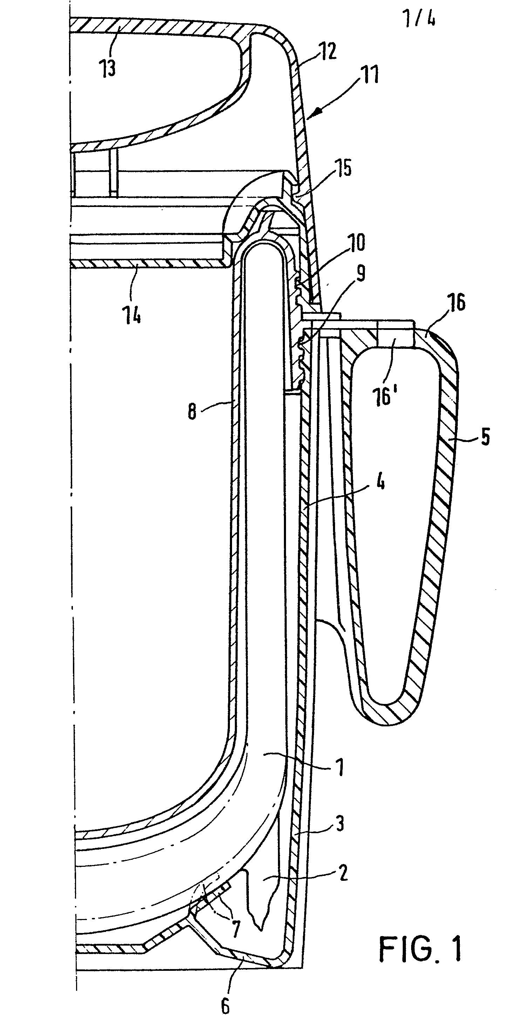

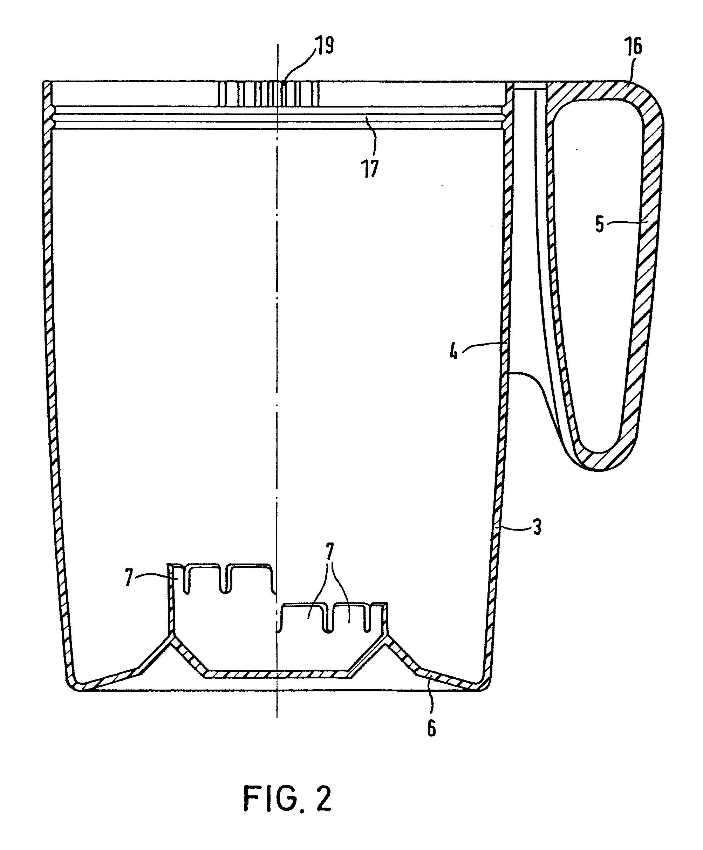

Gemäss Fig. 1 besteht das Speisegefäss aus einem wärmeisolierenden Innenbehälter 1, der beispielsweise aus einem doppelwandingen, evakuierten Glasbehälter besteht. Der zugeschmolzene Evakuierstutzen ist mit 2 bezeichnet. Der Innenbehälter 1 ist von einem Mantelkörper 3 umgeben, welcher aus einem Mantelteil 4 mit seitlichem Traggriff 5 und einem Bodenteil 6 besteht. Von der Innenseite des Bodenteiles 6 stehen elastische Stege 7 hoch, die gemäss Fig. 2 kreisförmig angeordnet sind, etwa blütenblattartig, und den Innenbehälter 1 abstützen. In Fig. 1 ist strichliert eine zweite, innerhalb der Toleranz liegende Grösse des Innenbehälters angedeutet, wobei die elastischen Stege 7 dann die ebenfalls strichliert angedeutete Lage einnehmen. Innerhalb des Innenbehälters 1 ist ein Inneneinsatz 8 angeordnet, der über eine Verrastkonstruktion, die insgesamt mit 9 bezeichnet ist, mit dem Mantelkörper 3 verbunden ist. Bei der gezeigten Ausführungsform erstreckt sich der Inneneinsatz 8 über die Oberkante des Innenbehälters 1 nach aussen und trägt an der Aussenseite ein Gewinde 10, auf welches ein insgesamt mit 11 bezeichneter Gefässverschluss aufschraubbar ist. Der Gefässverschluss 11 besteht aus einem Deckelteil 12 mit Traggriff 13, in welchen ein Dichtungsteil 14 über eine insgesamt mit 15 bezeichnete Verrastkonstruktion eingesetzt ist. Das Dichtungsteil 14 schliesst im aufgeschraubten Zustand des Gefässverschlusses 11 die obere Öffnung des Inneneinsatzes mit Innenbehälter dichtend ab. Der Traggriff 5 an der Aussenseite des Mantelteiles 4 weist in seinem oberen Steg 16 eine Öffnung 16' auf, in welche ein Besteckteil einsteckbar ist.

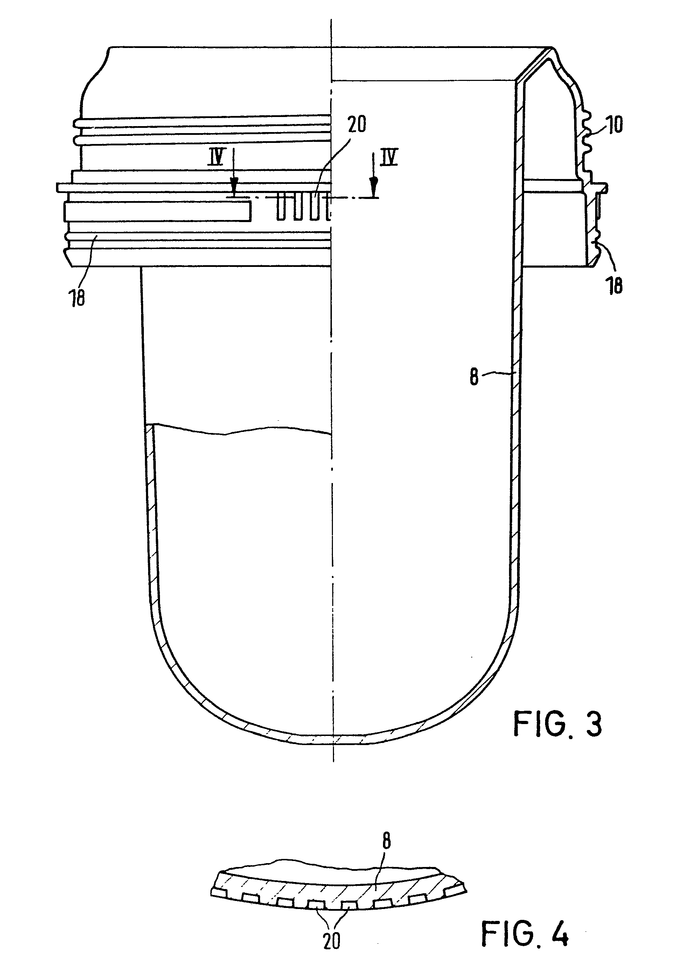

Zur näheren Erläuterung der Verrastkonstruktionen 9 und 15 wird auf die Fig. 2 bis 7 verwiesen. Jede Verrastkonstruktion besteht aus einer kombinierten Drehverrastung und einer Axialzugverrastung. Als Axialzugverrastung der Rastkonstruktion 9 sind gemäss Fig. 2 an der Innenseite des Mantelteiles 4 des Mantelkörpers 3 vorspringende Umfangsstege 17 vorgesehen, welche im zusammengebauten Zustand mit Umfangsstegen 18 am Inneneinsatz 8 gemäss Fig. 3 zusammenwirken. Als Drehverrastung ist über einen inneren zylindrischen Mantelbereich des Mantelteiles 4 eine Anzahl von vorstehenden, sich axial erstreckenden Stegen 19 angeordnet, welche in Ausnehmungen 20 nach Fig. 3 und 4 bei der Verbindung der Umfangsstege 17, 18 einrasten.

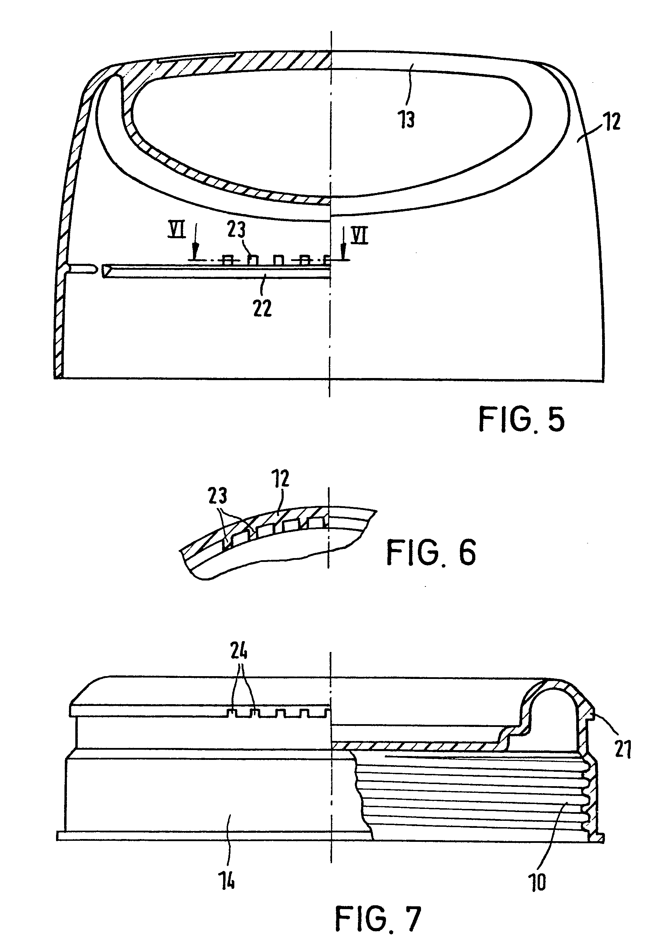

Die Axialzugverrastung der Rastkonstruktion 15 zwischen Deckelteil 12 und Dichtungsteil 14 besteht gemäss Fig. 5 und 7 aus einem sich in Umfangsrichtung erstreckenden vorspringenden Steg 21, der sich über den gesamten Umfang oder nur teilweise über den Umfang erstrecken kann, wobei der Steg 21 hinter über den Innenumfang verteilte Vorsprünge 22 des Deckelteiles 12 einschnappt. An der Innenwandung des Deckelteiles 12 sind als Drehverrastung vorspringende Stege 23 vorgesehen, welche in Ausnehmungen 24 am Umfang des Dichtungsteiles 14 einrasten.

**Patentansprüche**

1. Als Isoliergefäss ausgebildetes Speisegefäss mit einem wärmeisolierenden Innenbehälter (1) zum Beispiel aus Glas und diesen umgebenden und haltenden äusseren Mantelkörper (3), von dem ein Handgriff (5) seitlich absteht und der aus einem oberen Mantelteil (4) und einem mit ihm einstückigen, den Innenbehälter (1) von unten haltenden Bodenteil (6) besteht, mit einem den Innenbehälter auskleidenden Inneneinsatz (8), der über den oberen Rand des Innenbehälters (1) hinweg, diesen einschliessenden mit dem Mantelteil (4) verbunden ist, sowie mit Befestigungsmitteln (15) für einen Gefässverschluss (11), bestehend aus einem Deckelteil (12) und einem die obere Öffnung des durch den Inneneinsatz (8) abgedeckten Innenbehälters (1) abdichtenden Dichtungseinsatz (14), wobei der Mantelkörper mit Bodenteil (6), der Inneneinsatz (8) und der Gefässverschluss (11) aus Kunststoff gefertigt sind, dadurch gekennzeichnet, dass das Mantelteil (4) mit dem Inneneinsatz (8), sowie das Deckelteil (12) mit dem Dichtungsteil (14) des Gefässverschlusses (11) durch Verrastkonstruktionen (9; 15) fest miteinander verbunden sind und die Verrastkonstruktionen (9; 15) jeweils aus einer kombinierten Drehverrastung (19, 20 bzw.

23, 24) und einer Axialzugverrastung (17, 18 bzw. 21, 22) bestehen.

2. Speisegefäss nach Anspruch 1, dadurch gekennzeichnet, dass zwischen dem Mantelteil (4) und dem Inneneinsatz (8) die Axialzugverrastung aus vorspringenden Umfangsstegen (17, 18) besteht und die Drehverrastung aus zumindest über einen Teil des Umfanges von einander gegenüberliegenden zylindrischen Bereichen von Mantelteil und/oder Inneneinsatz sich axial erstreckenden und radial vorspringenden Raststegen (19) besteht, die in Ausnehmungen (20) in entsprechenden Bereichen im Inneneinsatz (8) und/oder Mantelteil (4) einrasten.

3. Speisegefäss nach Anspruch 2, dadurch gekennzeichnet, dass zwischen dem Deckelteil (12) und dem Dichtungsteil (14) des Gefässverschlusses (11) die Axialzugverrastung aus zumindest über einen Teil des Umfanges von einander gegenüberliegenden Bereichen von Deckel- und/oder Dichtungsteil sich in Umfangsrichtung erstreckenden, vorspringenden Stegen (21) besteht, die hinter entsprechende Vorsprünge (22) im Dichtungs- und/oder Deckelteil axial einrasten und dass die Drehverrastung aus zumindest über einen Teil des Umfanges von einander axial oder radial gegenüberliegenden Bereichen von Deckel- und/oder Dichtungsteil sich erstreckenden vorspringenden Raststegen (23) besteht, die in Ausnehmungen (24) in entsprechenden Bereichen im Dichtungs- und/oder Deckelteil einrasten.

4. Speisegefäss nach Anspruch 1, dadurch gekennzeichnet, dass auf der Innenseite des Bodenteiles (6) einstückig angeformte, hochstehende, den Innenbehälter (1) abstützende elastische Stege (7) angeordnet sind.

5. Speisegefäss nach Anspruch 4, dadurch gekennzeichnet, dass mehrere Stege (7) kreisförmig angeordnet sind und etwa blütenblattartig hochstehen.

## Revendications

1. Récipient isolant pour aliments, composé d'un réceptacle intérieur thermo-isolant (1), par exemple en verre, et d'un corps d'enveloppe extérieur (3) entourant et maintenant celui-ci et dont une poignée (5) s'écarte latéralement et qui se compose d'une partie d'enveloppe supérieure (4) ainsi que d'une partie de fond (6), d'une pièce avec elle et maintenant par le bas le réceptacle intérieur (1), le récipient étant composé aussi d'un élément inséré (8), qui revêt le réceptacle intérieur et qui est relié à la partie d'enveloppe (4), pardessus le bord supérieur du réceptacle intérieur (1) et en l'entourant, ainsi que de moyens de fixation (15) pour un bouchon (11) de récipient, composé d'une partie de couvercle (12) et d'une partie jointive (14) fermant jointivement l'ouverture supérieure du réceptacle intérieur (1) recouvert par l'élément inséré (8), cependant que le corps d'enveloppe avec la partie de fond (6), l'élément inséré (8) et le bouchon (11) de récpient sont fabriqués en matière plastique, caractérisé en ce que des systèmes d'encrantement (9, 15) assemblent fixement la partie d'enveloppe (4) avec l'élément inséré (8), ainsi que la partie de couvercle (12) avec la partie jointive (14) du bouchon (11) de récipient, et que ces sytèmes d'encrantement (9, 15) sont composés chaque fois d'un encrantement combiné tournant (19, 20 et 23, 24) ainsi que d'un encrantement à traction axiale (17, 18, et 21, 22).

2. Récipient pour aliments suivant la revendication 1, caractérisé en ce qu'entre la partie d'enveloppe (4) et l'élément inséré (8), l'encrantement à traction axiale se compose de nervures périphériques saillantes (17, 18) et que l'encrantement tournant se compose de nervures d'encrantement (19), qui s'étendent axialement au moins sur une partie du pourtour de zones cylindriques de la partie d'enveloppe et/ou de l'élément inséré se faisant face et qui font saillie radialement, ces nervures (19) s'encrantant dans des évidements (20) pratiqués dans des zones correspondantes de l'élément inséré (8) et/ou de la partie d'enveloppe (4).

3. Récipient pour aliments suivant la revendication 2, caractérisé en ce qu'entre la partie de couvercle (12) et la partie jointive (14) du bouchon (11) de récipient, l'encrantement à traction axiale se compose de nervures saillantes (21), qui s'étendent dans le sens du pourtour, au moins sur une partie du pourtour de zones de la partie de couvercle, et/ou de la partie jointive se faisant face, ces nervures s'encrantant axialement derrière des saillies correspondantes (22) pratiquées dans la partie jointive et/ou dans celle du couvercle, et que l'encrantement tournant se compose de nervures saillantes d'encrantement (23), qui s'étendent au moins sur une partie du pourtour de zones de la partie du couvercle, et/ou de la partie jointive se faisant face axialement ou radialement, ces nervures s'encrantant dans des évidements (24) prévus dans des zones correspondantes de la partie jointive et/ou de la partie du couvercle.

4. Récipient pour aliments suivant la revendication 1, caractérisé en ce que, sur le côté intérieur de la partie de fond (6), sont disposées des pattes élastiques (7) formées d'une pièce en saillie, et soutenant le réceptacle intérieur (1).

5. Récipient pour aliments suivant la revendication 4, caractérisé en ce que plusieurs pattes (7) sont disposées en cercle et font saillie approximativement à la façon de pétales de fleurs.

## Claims

1. Insulated food container with a thermally insulating inside container (1), for example formed of glass, and outer jacketing body (3) surrounding and holding this, from which a hand-grip (5) is laterally offset and which consists of a base part (6) in one piece with it holding the inside container (1) from below, with an internal insert (8) lining the inside container, which insert is connected across the upper edge of the inside container (1), enclosing this, with the jacketing part (4), as well as with fixing means (15) for a vessel closure (11) consisting of a lid part (12), and a sealing insert (14) sealing the top opening of the inside container (1) covered by the internal insert (8), with the jacketing body with base part (6), the internal insert (8) and the vessel closure (11) being manufactured out of plastics, characterised in that the jacketing part (4) with the internal insert (8), as well as the lid part (12) with the sealing part (14) of the vessel closure (11) are connected fast with one another by arresting structures (9; 15) and the arresting structures (9; 15) consist respectively of a combined rotation arrester (19, 20 or 23, 24) and an axial movement arrester (17, 18) or (21, 22).

2. Food container according to claim 1, characterised in that between the jacketing part (4) and the internal insert (8), the axial movement arrester consists of projecting peripheral webs (17, 18) and the rotation arrester consists of stop projections (19) extending axially and projecting radially at least over a part of the circumference of cylindrical regions of jacketing part and/or internal insert lying opposite one another, which projections engage in recesses in corresponding regions in the internal insert (8) and/or the jacketing part (4).

3. Food container according to claim 2, characterised in that the axial movement arrester between the lid part (12) and the sealing part (14) of the vessel closure (11) consists of webs (21) projecting at least over a part of the periphery of regions of lid and/or sealing part lying opposite one another, extending in the peripheral direction, which webs axially engage behind corresponding projections (22) in the sealing and/or lid part and that the rotation arrester consists of stop webs (23) projecting at least over a part of the periphery of regions extending from lid and/or sealing part lying axially or radially opposite one another, which webs engage in recesses (24) in corresponding regions in the sealing and/or lid part.

4. Food container according to claim 1, characterised in that integrally formed, proudly standing elastic webs (7) supporting the inside container (1) are arranged on the inside of the base part (6).

5. Food container according to claim 4, characterised in that several webs (7) are arranged in a circle and stand proudly somewhat like petals.

0 052 726

1/4

FIG. 1

FIG. 2

FIG. 3

FIG. 4

11

FIG. 5

FIG. 6

FIG. 7